# EUROPÄISCHE PATENTSCHRIFT

(11) **EP 1 221 191 B1**
(45) Veröffentlichungstag und Bekanntmachung des Hinweises auf die Patenterteilung: **07.05.2003**
(21) Anmeldenummer: 00965866.7
(22) Anmeldetag: 10.10.2000
(51) Int. Cl.: H02K 1/22

(54) **ELEKTRISCHER MOTOR MIT EINEM EINSEITIG GELAGERTEN LÄUFER**
ELECTRIC MOTOR COMPRISING A ROTOR MOUNTED ON ONE SIDE
MOTEUR ELECTRIQUE A ROTOR MONTE D'UN COTE

(30) Priorität: 12.10.1999 DE 19949135
(43) Veröffentlichungstag der Anmeldung: 10.07.2002
(73) Patentinhaber: DANFOSS COMPRESSORS GmbH, 24904 Flensburg (DE)
(72) Erfinder: WEIHRAUCH, Niels, Christian, 24980 Nordhackstedt (DE)
(74) Vertreter: Nissen, Georg
(86) Internationale Anmeldenummer: DK0000569
(87) Internationale Veröffentlichungsnummer: WO01028070

(56) Entgegenhaltungen:
- WO-A1-93/05563
- US-A- 5 233 254

## Beschreibung

Die Erfindung bezieht sich auf einen elektrischen Motor mit einem Läufer, der einseitig mit einem Lager in einem Ständer gelagert ist, sich vom Lager weg in axialer Richtung konisch verjüngt und zusammen mit dem Ständer einen Luftspalt bildet, dessen Breite in axialer Richtung vom Lager weg zunimmt.

Ein derartiger Motor ist aus US 5 233 254 bekannt. Bei diesem Motor wird ein schädlicher Kontakt zwischen Läufer und Ständer durch Vibrationen, die sich aufgrund der nur einseitigen Lagerung ergeben könnten, dadurch verhindert, daß sich der Luftspalt zwischen dem Läufer und dem Ständer vom Lager weg stetig vergrößert. Durch die Vergrößerung des Luftspalts nehmen die Magnetisierungsverluste durch Streufelder im Läufer zu, so daß der Wirkungsgrad des Motors abnimmt.

Aus DE 692 06 626 T2 ist die Ausführung eines Läufers bekannt, der in einem magnetisch leitenden Material eine Anzahl sich axial erstreckender Nuten aufweist, in denen elektrische Leiter angeordnet sind und deren Profil sich in ihrer Längsrichtung ändert. Dieser Läufer weist zentrisch eine Ausnehmung mit vergrößertem Durchmesser an einem axialen Ende auf. Die Axialnuten sind mit sich in Längsrichtung stufenförmig verändernden Profilen so angeordnet, daß trotz des Materialverlustes durch den vergrößerten Durchmesser an dem einen Ende im Kern des Läufers keine magnetische Sättigung auftritt. Eine derartige Anordnung der Nuten ist bei zylinderförmigen Läufern problemlos möglich. Bei einem konisch ausgebildeten Läufer jedoch unterscheidet sich bei einer derartigen Anordnung der Nuten die Dicke einer Überdeckung der Nuten durch das magnetisch leitende Material zu einer Umfangsfläche des Läufers hin an den beiden Enden der Nuten stark, und in vielen Fällen tritt nur in geringen Teilen der Überdeckung eine magnetische Sättigung auf, die aber zur Erhöhung des Wirkungsgrades erwünscht ist.

Aufgabe der Erfindung ist die Verbesserung des Wirkungsgrades eines elektrischen Motors, bei dem der Läufer konisch ausgebildet ist.

Diese Aufgabe wird bei einem Motor der eingangs genannten Art dadurch gelöst, daß die Differenz zwischen Höchstwert und Mindestwert der Dicke einer Überdeckung der Nuten durch das magnetisch leitende Material des Läufers in radialer Richtung zwischen einem radial äußeren Nutende und einer Umfangsfläche des Läufers geringer ist als bei einer vom Lager weg in axialer Richtung stetig abnehmenden Dicke der Überdeckung.

Diese Ausführungsweise bewirkt, daß durch die geringe Gesamtüberdeckung der Nuten durch magnetisch leitendes Material in radialer Richtung das Material im Überdeckungsbereich zwischen dem radial äußeren Nutende und der Umfangsfläche verstärkt in Sättigung geht und das magnetische Feld dadurch gezwungen wird, über den Luftspalt auf den Ständer überzuspringen. Diese verbesserte Kopplung des magnetischen Feldes auf den Ständer erzeugt ein zusätzliches Drehmoment und erhöht den Wirkungsgrad des elektrischen Motors.

Hierbei ist von Vorteil, daß die Nuten an ihrem dem Lager zugewandten Ende eine andere Querschnittsfläche aufweisen als an ihrem dem Lager abgewandten Ende und daß zwischen beiden Enden jeder einzelnen Nut ein Übergangsbereich angeordnet ist. Durch die verschiedenen Querschnittsflächen an beiden Enden der einzelnen Nuten und dem dazwischen liegenden Übergangsbereich läßt sich die konische Verjüngung des Läufers bezüglich der Überdeckungsdicke der Nuten ausgleichen, wodurch die Dicke der Überdeckung über den axialen Verlauf des Läufers angenähert konstant gering ausgebildet werden kann und Magnetisierungsverluste durch Streufelder verringert werden.

Vorteilhafterweise verkleinert sich im Übergangsbereich der Querschnitt der Nuten vom Lager weg in axialer Richtung stetig. Dieser stetige Übergang ermöglicht eine Verbesserung der Anpassung einer radialen Außenseite einer Nut an die Umfangsfläche des Läufers und die Verringerung von Magnetisierungsverlusten durch Streufelder.

Hierbei ist besonders bevorzugt, daß eine radiale Außenseite jeder Nut jeweils parallel zu der Umfangsfläche des Läufers liegt. Durch die parallele Lage der radialen Außenseite der Nuten der Umfangsfläche des Läufers kann die Überdeckungsdicke der Nuten über den gesamten axialen Verlauf des Läufers konstant gering gehalten werden, wodurch eine Minimierung der Magnetisierungsverluste und eine Maximierung des Wirkungsgrades durch über die axiale Länge des Läufers gleichmäßig erhöhtes Überspringen des Magnetfeldes auf den Ständer erzielt wird.

Vorzugsweise weist der Übergangsbereich jeder einzelnen Nut mindestens zwei Abschnitte auf, innerhalb derer die einzelnen Nuten gleichbleibende Querschnittsflächen aufweisen, wobei die Abschnitte einer einzelnen Nut untereinander verschiedene Querschnittsflächen aufweisen.

Durch die Anordnung entsprechend geeigneter Querschnittsflächen in den einzelnen Abschnitten kann eine Anpassung an die Umfangsfläche des sich konisch verjüngenden Läufers erzielt werden. Hierdurch wird die Dicke der Überdeckung über den axialen Verlauf des Läufers insgesamt reduziert. Gleichzeitig werden Magnetisierungsverluste durch Streufelder verringert.

Hierbei ist von Vorteil, daß die Nuten radial zur Läuferachse begrenzende Flächen der Abschnitte parallel zur Läuferachse angeordnet sind. Hierdurch kann der Aufbau des magnetisch leitenden Materials des Läufers weitgehend in traditioneller Weise erfolgen.

Hierbei ist besonders bevorzugt, daß die Dicke der größten Überdeckung eines Abschnitts nicht größer als die der größten Überdeckung des in axialer Richtung längsten Abschnitts und die Dicke der kleinsten Überdeckung eines Abschnitts nicht kleiner als die der kleinsten Überdeckung des in axialer Richtung längsten Abschnitts ist. Auf diese Weise wird die abgestufte Anpassung der radialen Außenseiten der Nuten an die Umfangsfläche des Läufers innerhalb der Abschnitte vergleichmäßigt und eine Verbesserung der Anpassung sowie eine Verringerung der Magnetisierungsverluste durch Streufelder erreicht.

Vorzugsweise weist die Überdeckung zwischen einem radial äußeren Nutende und der Umfangsfläche eine vorbestimmte Dicke auf, bei der das magnetisch leitende Material der Überdeckung bei allen im Betrieb herrschenden magnetischen Feldstärken einen vorbestimmten Sättigungsgrad annimmt. Dieser vorbestimmte Sättigungsgrad im Überdeckungsbereich unterstützt eine verstärkte Kopplung des magnetischen Feldes vom Läufer auf den Ständer und trägt somit zur Erhöhung des Wirkungsgrades bei.

Es ist besonders bevorzugt, daß die Querschnittsflächen der Nuten zur radialen Außenseite hin zugespitzt ausgeformt sind. Durch die Ausbildung der Nutenspitzen wird der Punkt, von dem aus das Überspringen des Magnetfeldes vom Läufer über den Luftspalt zum Ständer erfolgt, festgelegt. Gleichzeitig werden unnötige Streuverluste des Magnetfeldes verhindert. Außerdem wird eine bessere Fixierung der elektrischen Leiter in den Nuten ermöglicht. Außerdem werden so die sich infolge der unterschiedlichen Eindringtiefen des Magnetfeldes in die Leiter bei verschiedenen Frequenzen verändernden Widerstände an die Bedürfnisse beim Anlaufen und beim späteren Betrieb angepaßt.

Besonders vorteilhaft ist die Anwendung eines solchen Motors in einem hermetisch gekapselten Kältemittelverdichter.

Die Erfindung wird im folgenden anhand eines bevorzugten Ausführungsbeispiels in Verbindung mit der Zeichnung näher beschrieben. Hierin zeigen:
- Fig. 1: einen Schnitt durch einen erfindungsgemäß ausgestatteten elektrischen Motor,
- Fig. 2: einen Schnitt durch den Läufer mit Nuten, die entsprechend einer bekannten Ausführung eine über die gesamte Länge gleichbleibende Querschnittsfläche aufweisen, und drei Scheiben des Läufers, die die Nutfiguration zeigen, und
- Fig. 3: einen Schnitt durch den Läufer mit Nuten, die über ihre Länge verschiedene Abschnitte aufweisen, und drei Scheiben des Läufers, die die jeweilige Nutfiguration zeigen.

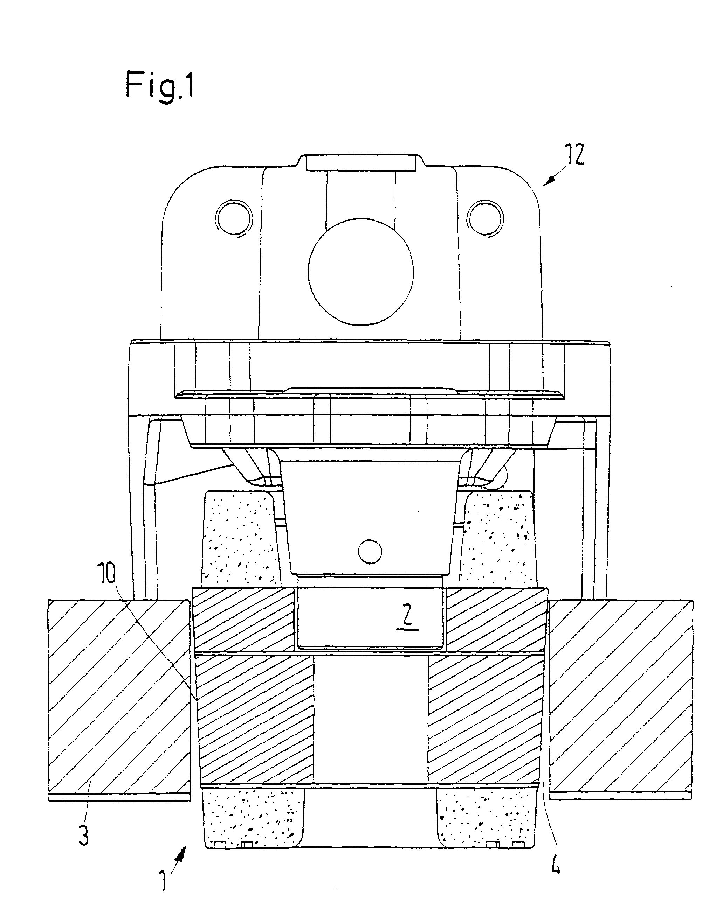

Der in Fig. 1 veranschaulichte Motor weist einen Läufer 1, einen Ständer 3 und einen Zylinderblock 12 auf. Der Läufer 1 ist mit einem Lager 2 in dem Ständer 3 gelagert und verjüngt sich konisch vom Lager 2 weg in axialer Richtung. Läufer 1 und Ständer 3 bilden einen Luftspalt 4, dessen Breite in axialer Richtung vom Lager weg zunimmt. Der Luftspalt 4 ist so ausgeführt, daß für den vorgesehenen Betrieb des Motors eine Berührung durch auftretende Vibrationen zwischen Läufer 1 und Ständer 3 ausgeschlossen ist.

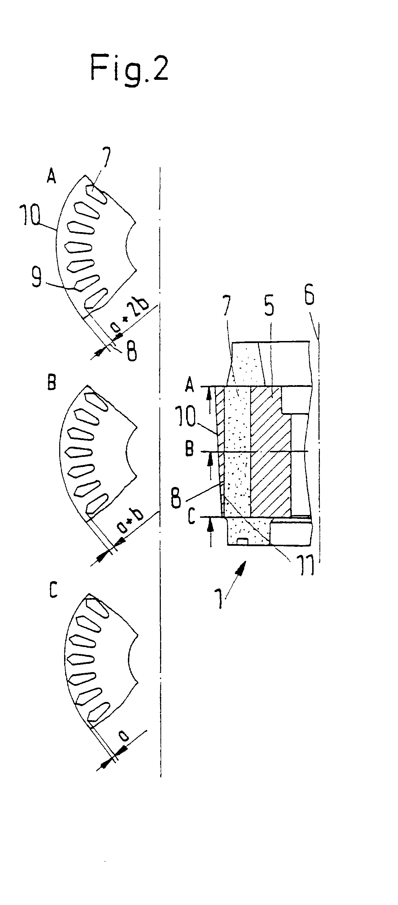

Fig. 2 zeigt eine Ausführung des Läufers 1 nach dem Stand der Technik, bei der die Nuten 7, wie aus DE 692 06 626 T2 bekannt, jeweils eine radiale Außenseite 11 aufweisen, die über die gesamte Länge einen gleichbleibenden Abstand zu einer Läuferachse 6 aufweist. Der Läufer 1 ist aus einem magnetisch leitenden Material 5 hergestellt und weist eine Anzahl der Nuten 7 auf, in denen elektrische Leiter angeordnet sind. Das magnetisch leitende Material 5 des Läufers 1 bildet in radialer Richtung zwischen einem radial äußeren Nutende 9 und einer Umfangsfläche 10 des Läufers 1 eine Überdeckung 8. Des weiteren zeigt Fig. 2 Ausschnitte von drei Scheiben in den Schnittebenen A, B, C, die zusammen mit anderen nichtdargestellten Scheiben das magnetisch leitende Material 5 des Läufers 1 bilden.

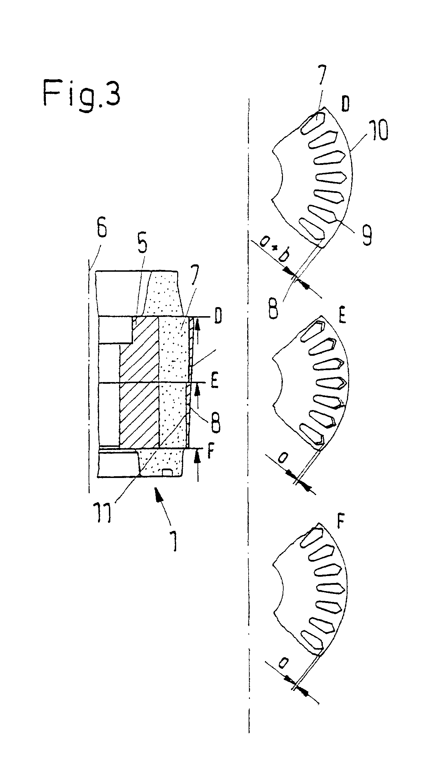

Fig. 3 zeigt die erfindungsgemäße Ausführung eines Läufers 1 mit Nuten 7, die in axialer Richtung mindestens zwei Abschnitte (D-E; E-F) aufweisen, innerhalb derer die einzelnen Nuten 7 gleichbleibende Querschnittsflächen haben und die innerhalb einer Nut 7 untereinander verschiedene Querschnittsflächen aufweisen. Desweiteren zeigt Fig. 3 Ausschnitte von drei Scheiben in den Schnittebenen D, E, F, die zusammen mit anderen nicht dargestellten Scheiben das magnetisch leitende Material 5 des Läufers 1 bilden. Innerhalb eines Abschnitts in axialer Richtung weisen alle Scheiben bezüglich Anordnung der Nuten, Abstand der Nuten zur Läuferachse 6 und Größe der Nuten 7 eine gleiche Ausführung auf und unterscheiden sich lediglich bezüglich des Außendurchmessers, der in axialer Richtung vom Lager weg stetig abnimmt. Untereinander weisen beide Abschnitte D-E und E-F verschieden große Nuten 7 auf, wobei die Nuten des dem Lager 2 zugewandten Abschnitts D-E größer sind als die Nuten 7 des dem Lager 2 abgewandten Abschnitts E-F. Die Dicke der Überdeckung 8 verringert sich bei beiden Abschnitten (D-E; E-F) in axialer Richtung vom Lager 2 weg von einem Wert a plus b auf einen Wert a. Dabei stellt b den Teil der Überdeckung dar, der sich infolge der im axialen Schnitt eines Abschnitts der Überdeckung keilförmig ausgeführten Überdeckung 8 in axialer Richtung vom Lager 2 weg von Scheibe zu Scheibe stetig bis auf den Wert Null verkleinert, und a ist der Mindestwert der Dicke der Überdeckung 8 der Nuten 7. Durch eine gegen unendlich gehende Erhöhung der Anzahl der Abschnitte wird ein allmählicher Übergang des Querschnitts der Nuten 7 von einem Ende zum anderen Ende hergestellt. Dabei liegt die radiale Außenseite 11 jeder Nut 7 angenähert parallel zu der konisch ausgeführten Oberfläche 10 des Läufers 1.

## Patentansprüche

1. Motor mit einem Läufer (1), der einseitig mit einem Lager (2) in einem Ständer gelagert ist, sich vom Lager (2) weg in axialer Richtung konisch verjüngt und zusammen mit dem Ständer (3) einen Luftspalt (4) bildet, dessen Breite in axialer Richtung vom Lager weg zunimmt, **dadurch gekennzeichnet, daß** der Läufer in einem magnetisch leitenden Material (5) eine Anzahl sich axial erstreckender Nuten (7) aufweist, in denen elektrische Leiter angeordnet sind, wobei die Differenz zwischen Höchstwert und Mindestwert der Dicke einer Überdeckung (8) der Nuten (7) durch das magnetisch leitende Material (5) in radialer Richtung zwischen einem radial äußeren Nutende (9) und einer Umfangsflache (10) des Läufers (1) geringer ist als bei einer vom Lager (2) weg in axialer Richtung stetig abnehmenden Dicke der Überdeckung (8).

2. Motor nach Anspruch 1, **dadurch gekennzeichnet, daß** die Nuten (7) an ihrem dem Lager (2) zugewandten Ende eine andere Querschnittsfläche aufweisen als an ihrem dem Lager (2) abgewandten Ende und daß zwischen beiden Enden jeder einzelnen Nut (7) ein Übergangsbereich angeordnet ist.

3. Motor nach Anspruch 2, **dadurch gekennzeichnet, daß** sich im Übergangsbereich der Querschnitt der Nuten (7) vom Lager (2) weg in axialer Richtung stetig verkleinert.

4. Motor nach einem der Ansprüche 1 bis 3, **dadurch gekennzeichnet, daß** eine radiale Außenseite (11) jeder Nut (7) jeweils parallel zu der Umfangsfläche (10) des Läufers (1) liegt.

5. Motor nach Anspruch 2, **dadurch gekennzeichnet, daß** der Übergangsbereich jeder einzelnen Nut (7) mindestens zwei Abschnitte aufweist, innerhalb derer die einzelnen Nuten (7) gleichbleibende Querschnittsflächen aufweisen, wobei die Abschnitte einer einzelnen Nut (7) untereinander verschiedene Querschnittsflächen aufweisen.

6. Motor nach Anspruch 5, **dadurch gekennzeichnet, daß** die Nuten radial zur Läuferachse (6) begrenzende Flächen der Abschnitte parallel zur Läuferachse (6) angeordnet sind.

7. Motor nach einem der Ansprüche 5 und 6, **dadurch gekennzeichnet, daß** die Dicke der größten Überdeckung (8) eines Abschnitts nicht größer als die der größten Überdeckung (8) des in axialer Richtung längsten Abschnitts und die Dicke der kleinsten Überdeckung (8) eines Abschnitts nicht kleiner als die der kleinsten Überdeckung (8) des in axialer Richtung längsten Abschnitts ist.

8. Motor nach einem der Ansprüche 1 bis 7, **dadurch gekennzeichnet, daß** die Überdeckung (8) zwischen einem radial äußeren Nutende (9) und der Umfangsfläche (10) eine vorbestimmte Dicke aufweist, bei der das magnetisch leitende Material (5) der Überdeckung (8) bei allen im Betrieb herrschenden magnetischen Feldstärken einen vorbestimmten Sättigungsgrad annimmt.

9. Motor nach einem der Ansprüche 1 bis 8, **dadurch gekennzeichnet, daß** die Querschnittsfläche der Nuten (7) zur radialen Außenseite (11) hin zugespitzt ausgeformt ist.

10. Anwendung des Motors nach einem der Ansprüche 1 bis 9 in einem hermetisch gekapselten Kältemittelverdichter.

## Claims

1. Motor comprising a rotor (1) that is mounted on one side in a stator by means of a bearing (2), tapers away conically from the bearing (2) in an axial direction, and together with the stator (3) forms an air gap (4), the width of which increases in the axial direction away from the bearing, **characterized in that** the rotor displays a number of axially-extending grooves (7) in an magnetically conductive material (5), in which grooves are arranged electrical conductors, the difference between the maximum value and the minimum value of the thickness of a covering (8) of the grooves (7) by the magnetically conductive material (5) in a radial direction between a radially- outer groove end (9) and a peripheral surface (10) of the rotor (1) being less than in the case of a thickness of the covering (8) that constantly decreases in an axial direction away from the bearing (2).

2. Motor according to claim 1, **characterized in that** the grooves (7) display, at their end facing the bearing (2), display a different cross-sectional area than at their end opposite the bearing (2), and that arranged between the two ends of each individual groove (7) is a transition region.

3. Motor according to claim 2, **characterized in that**, in the transition region, the cross section of the grooves (7) constantly diminishes in an axial direction away from the bearing (2).

4. Motor according to one of the claims 1 through 3, **characterized in that** a radial outer side (11) of each groove (7) in each case lies parallel to the peripheral surface (10) of the rotor (1).

5. Motor according to claim 2, **characterized in that** the transition region of each individual groove (7) displays at least two segments, within which the individual grooves (7) have constant cross-sectional areas, the segments of an individual groove (7) having cross-sectional areas that differ from each other.

6. Motor according to claim 5, **characterized in that** the surfaces of the segments that bound the grooves radially towards the rotor axis (6) are arranged parallel to the rotor axis (6).

7. Motor according to one of the claims 5 and 6, **characterized in that** the thickness of the greatest covering (8) of a segment is no greater than that of the greatest covering (8) of the segment that is longest in the axial direction, and the thickness of the least covering (8) of a segment is no less than that of the least covering (8) of the segment that is longest in the axial direction.

8. Motor according to one of the claims 1 through 7, **characterized in that** the covering (8) between a radially-outer groove end (9) and the peripheral surface (10) has a predetermined thickness at which the magnetically conductive material (5) of the covering (8) assumes a predetermined degree of saturation in the case of all magnetic field strengths prevailing during operation.

9. Motor according to one of the claims 1 through 9 **characterized in that** the cross-sectional area of the grooves (7) comes to a point towards the radial outer side (11).

10. Application of the motor according to one of the claims 1 through 9 in a hermetically-encapsulated refrigerant compressor.

## Revendications

1. Moteur avec un rotor (1) qui est logé sur un côté avec un palier (2) dans un stator et qui, en partant du palier (2) dans la direction axiale va en se réduisant de façon conique et qui, conjointement avec le stator (3) forme un entrefer (4) dont la largeur augmente dans la direction axiale en partant du palier, **caractérisé en ce que** le rotor en matériau conducteur magnétique (5) présente une pluralité de gorges (7) s'étendant axialement, dans lesquelles sont disposés des conducteurs électriques, la différence entre la valeur maximum et la valeur minimum de l'épaisseur d'un recouvrement (8) des gorges (7) par le matériau conducteur magnétique (5) dans la direction radiale entre une extrémité de gorge (9) extérieure radialement et une surface périphérique (10) du rotor (1) étant plus faible que pour une épaisseur du recouvrement (8) allant constamment en se réduisant en partant du palier (2) dans la direction axiale.

2. Moteur selon la revendication 1, **caractérisé en ce que** sur leur extrémité dirigée vers le palier (2) les gorges (7) présentent une autre section transversale que sur leur extrémité détournée du palier (2) et **en ce qu'**une zone de transition est agencée entre les deux extrémités de chaque gorge individuelle (7).

3. Moteur selon la revendication 2, **caractérisé en ce que** dans la zone de transition, la section transversale des gorges (7) en partant du palier (2) dans la direction axiale diminue de façon constante.

4. Moteur selon l'une des revendications 1 à 3, **caractérisé en ce qu'**un côté extérieur radial (11) de chaque gorge (7) se situe respectivement parallèlement à la surface périphérique (10) du rotor (1).

5. Moteur selon la revendication 2, **caractérisé en ce que** la zone de transition de chaque gorge individuelle (7) présente au moins deux tronçons à l'intérieur desquels les différentes gorges (7) présentent des aires transversales constantes, les tronçons de chaque gorge individuelle (7) présentant des aires transversales différentes entre elles.

6. Moteur selon la revendication 5, **caractérisé en ce que** les surfaces délimitant les gorges radialement par rapport à l'axe de rotor (6) des tronçons sont agencées parallèlement à l'axe de rotor (6).

7. Moteur selon l'une des revendications 5 et 6, **caractérisé en ce que** l'épaisseur du plus grand recouvrement (8) d'un tronçon n'est pas plus grand que le plus grand recouvrement (8) du tronçon le plus long dans la direction axiale et l'épaisseur du plus petit recouvrement (8) d'un tronçon n'est pas plus petit que le plus petit recouvrement (8) du tronçon le plus long dans la direction axiale.

8. Moteur selon l'une des revendications 1 à 7, **caractérisé en ce que** le recouvrement (8) entre une extrémité de gorge extérieure (9) radialement et la surface périphérique (10) présente une épaisseur prédéterminée avec laquelle le matériau conducteur magnétique (5) du recouvrement (8) accepte un degré de saturation prédéterminé pour toutes les intensités de champ magnétique régnant dans le fonctionnement.

9. Moteur selon l'une des revendications 1 à 8, **caractérisé en ce que** l'aire transversale des gorges (7) va en se réduisant en pointe vers le côté extérieur radial (11).

10. Utilisation du moteur selon l'une des revendications 1 à 9 dans un compresseur de réfrigérant fermé hermétiquement.
